# EUROPEAN PATENT APPLICATION

(11) **EP 4 650 281 A1**
(43) Date of publication of application: **19.11.2025**
(21) Application number: 24176702.9
(22) Date of filing: 17.05.2024
(51) Int. Cl.: B65B 1/28, B65B 69/00, B65G 69/18, B65B 39/06, B65B 43/54, B65D 88/16, B65B 1/06, B65B 39/08

(54) **TRANSFER ADAPTER FOR CONNECTING A BAG TO A CONTAINER AND PROCESS OF ESTABLISHING A TRANSFER CONNECTION**

(71) Applicant: Lugaia AG, 3942 Raron (CH)
(72) Inventor: Schnyder, Viktor, 3942 Raron (CH); Schweizer, Michael, 3984 Fieschertal (CH); Lochmatter, Daniel, 3928 Randa (CH); Meichtry, Samuel, 3938 Ausserberg (CH); Näfen, Jan, 3912 Termen (CH)
(74) Representative: P&TS SA (AG, Ltd.)

(57) **Abstract**

The invention concerns a transfer adapter for connecting a bag or a tubular liner (510) to a container (60) for filling or emptying said bag or a tubular liner. The transfer adapter comprises an adapter unit (20) for connecting to an aperture of a container, said adapter unit having an inner wall delimiting a transfer opening, and a retaining (101, 102). The retaining unit comprises a retaining fixture (11) for receiving a circumferential strip of a bag or of a tubular liner (510), and a retaining element (12) being configured to hold said circumferential strip in the retaining fixture (11). The retaining unit (101, 102) is dimensioned to be removably positioned inside transfer opening such that the transfer opening together with the open bag or together with the open tubular liner (510) form a transfer passage.

The invention further concerns a transfer system comprising said adapter as well as a method of transferring material between a container and a bag or a tubular liner through said transfer adapter.

## Description

### Technical domain

The present invention concerns a transfer adapter for connecting a bag or a tubular liner to a container, thereby facilitating the transfer of material such as bulk material, between the container and the bag or the tubular liner. The invention also concerns a method for emptying contents of a container into a bag or a tubular liner, or transferring the contents of a container into a bag or a tubular liner.

### Related art

When handling or processing industrial bulk material efficiency, safety, and contamination control are paramount concerns. The transfer of bulk materials, whether powders, granules, or liquids, demands a meticulous process to prevent spillage during transfer while simultaneously safeguarding the transferred material from contamination.

Different transfer systems and adaptors for connecting bags or liners to containers to be filled or emptied are known in the art.

EP3000739 for example discloses an adaptor for connecting a bag to a container to enable the contamination-free filling or emptying of the bag. The adaptor is provided with a through-opening through which the material can be filled or emptied, and a holding means on the inner wall of the through-opening for receiving a bag section which is held in the holder by means of a holding element. The adaptor is designed to suitably connect to further adaptors, such that, when it is connected to an aperture of the container for filling or emptying, repeated transfers of material can be performed by stacking the adaptors used for each of the transfers on top of each other.

While repeated transfers are thereby enabled, stacking multiple adaptors on the container aperture is undesirably for the transfer process, as the increasing hight of the stacked connecting elements may render the process cumbersome and may require continued adaptation of the transfer procedure to the increasing hight. For example, containers may need to be lifted or lowered, to enable repeated emptying or filling processes.

For repeated emptying or filling procedures a series of transfer adaptors have to be provided, which adds unfavourably to the amount and volume of equipment necessary for multiple consecutive filling or emptying procedures.

Moreover, the fixing of the bag inside the through-opening is awkward, as access to the holder is limited by the opening and since the structure and weight of the transfer adaptor, which is provided with means for fixing it to a container and to other connecting elements, may render fastening the bag cumbersome.

In addition, since the holder for the bag is located inside the opening of the adaptor and therefore difficult to access, a thorough cleaning of the holder, which is crucial for a repeated use of a adaptor for the transfer of industrial bulk material, is also more difficult to achieve.

It is therefore desirable to improve the system described in EP3000739.

### Short disclosure of the invention

It is an aim of the present invention to provide an improved transfer adaptor connecting a container and a bag for transfer of material, in particular bulk material, which overcomes the shortcomings and limitations of the state of the art.

It is another aim of the invention to provide a transfer adaptor connecting a container and a bag for transfer of material, in particular bulk material, which allows for an easy fixation of the bag to a container to be filled or emptied.

It is another aim of the invention to find transfer adapter which facilitates repeated transfers between different bags and a container, without the need of stacking the transfer adapter on top of a previously used transfer adapter, such that a build-up of used transfer adaptors at the filling or the discharge aperture of the container can be avoided.

It is yet another aim of the invention to find a method for emptying material from a container into a bag or for filling a container with material received from a bag, which allows for easy transfer of the material.

It is yet another aim of the invention to find an alternative transfer adapter which avoids spillage the transferred material and/or contamination of the transferred material during emptying and/or filling of a container.

According to the invention, one or more of these aims are attained by the object of the attached claims, and especially by the independent claims. The dependent claims provide advantageous embodiments of this invention.

In particular, one or more of these aims are attained by a transfer adapter for connecting a bag or a tubular liner to a container for filling or emptying the bag or the tubular liner, said transfer adapter being provided with an adapter unit and a retaining unit.

The adapter unit is configured to be reversibly attached to an aperture of a container. The adapter is preferably designed to complement the opening of the container such as to be reversibly fitted to it, for example by means of interlocking parts. Such interlocking parts may for example be designed to form a bayonet catch. Other embodiments are however also possible.

The adapter unit has an inner wall delimiting a transfer opening. To enable the transfer of material, the transfer opening aligns with the aperture of the container when the adapter unit is attached to the container.

The retaining unit is removable from the adapter unit. The two units are formed as separate units and can therefore be provided independently from one another.

The retaining unit is configured to be fitted into the transfer opening, along the inner wall of the adapter unit.

The retaining unit comprises a retaining fixture for receiving a circumferential strip of a bag or of a tubular liner, and a retaining element for holding said circumferential strip in the retaining fixture. The bag or tubular liner is thus fixed to the retaining unit such that the retaining unit ensures that an inlet or an outlet opening delimited by the circumferential strip of the bag or the tubular liner stays open.

The retaining fixture may for example be shaped as a ring or an annulus with a circumferential, inwardly orientated notch dimensioned to receive a suitably dimensioned ring-shaped retaining element.

The retaining unit is dimensioned to match the cross-sectional shape of the transfer opening. It is dimensioned to be removably positioned inside transfer opening such that the transfer opening together with the open bag or together with the open tubular liner form a transfer passage.

When fitted in the transfer opening, the retaining unit is preferably arranged to form a seal, which may be a hermetic seal, which the inner wall of the adapter unit. The customised fit ensures that material can either be emptied from or filled into the container through the transfer adapter without risking contamination during the process.

To enable a better fitting the retaining unit may be elastically deformable. The increased flexibility of this elastically deformable retaining unit also renders its fitting into and removing from the adapter unit easier.

In one embodiment the aperture of the container as well as the transfer opening of the adapter unit have a circular shape. In this embodiment the retaining unit is formed in a ring-shape which suitable matches the transfer opening. Other shapes, for example and oval diameter of the aperture and a correspondingly shaped transfer opening and retaining unit, are however also possible.

In one embodiment the retaining unit comprises a removal member, for example an appendix such as a lug, arranged to permit removal of the retaining unit from the adapter unit when the removal member is pulled. The removal member may form an integral part of the retaining fixture. The removal member facilitates the removal of the retaining unit from the adapter unit, for example by pulling the removal member parallel to the transfer direction. Advantageously, the removal member is shaped to facilitate a good grip by a user's hand or by a corresponding tool, such as a hook or a pinch.

In one embodiment the retaining unit is configured to be translationally displaceable from a first position in the transfer opening to a second position in the transfer opening. When the transfer adapter is fitted for emptying or filling a container, the second position is located after the first position in direction of the transfer of the transferred material. The transfer direction may for example be defined by the gravity flow of the transferred material.

In this embodiment the adapter unit is preferably configured to hold two retaining elements at the same time, one in it the first position and another one in the second position.

In order to further improve the contamination-free transfer of material, a transfer adapter comprises a sealing element, which is arranged to provide a sealed connection between the inner wall of the adapter unit and the retaining unit and to maintain the sealed connection between the inner wall of the adapter unit and the retaining unit when the retaining unit is moved from the first position to the second position.

The sealing element may be an integral part of the adapter unit. It may be formed monobloc with the adapter unit.

In an embodiment of the adapter unit, which is designed to hold retaining units in two distinct consecutive positions, i.e. in a first and in a second position, the sealing element is preferably positioned between the first and the second position. To establish the robust seal, the sealing element should be arranged along the entire circumference of the inner wall of the adapter.

In one embodiment the sealing element is an elastically deformable or pivotable sealing lip which is located between the first position and the second position of the retaining unit. The sealing lip is arranged along the inner wall of the adapter unit. When relaxed, the lip is projecting inwards, roughly towards the centre of the transfer opening. It may be angled upwards, i.e. facing towards the opposite direction of the transfer. At least a part of the sealing lip may be arranged to contact the retaining unit when the retaining unit takes the first position, such as to form a circumferential seal between the inner wall and the retaining unit.

The sealing lip is arranged such that when the retaining unit is moved into the second position, the sealing lip is pushed in direction of this movement such that it faces in direction of the transfer when the retaining unit takes the second position. In other words, the inwards facing sealing lip is flicked from an upwards angled position to an downwards angled position during this movement. In this context, the term "downwards" signifies in direction of the transfer of the material, while the term "upwards" signifies in the direction opposite of the transfer of the material.

Importantly, the sealing lip maintains a sealed connection with the retaining unit during the translational displacement of the retaining unit from the first position to the second position.

The invention also concerns set of the transfer adapter having a second and a first position for movably placing one or two retaining tools as described above, and a fitting tool. The said fitting tool is placed onto the adapter unit for moving the retaining unit from the first position to the second position. To this end, the fitting tool is configured to engage with the retaining unit such that it causes the retaining unit to move from the first position to the second position when the fitting tool pushed in the direction of transfer of the material. The fitting unit may for example be provided with an annular or a ring-shaped portion which is arranged to be inserted into the transfer opening and to abut against a portion of the retaining unit when moved downwards. By pressing the abutted fitting tool further downwards, the movable retaining unit can be translationally displaced from the first position into the second position.

The invention further concerns a connection system comprising the transfer adapter having a second and a first position for movably placing one or two retaining tools as described above, and a bag or a tubular liner. The bag, respectively the tubular liner are suitably dimensioned to be retained by the retaining unit of the transfer adapter. In particular the opening of the bag or tubular liner is sufficiently large to be held in the retaining unit.

In one embodiment the bag respectively the tubular liner are provided with two openings each arranged at opposite ends of the bag or the tubular liner. Each of said opposite openings is dimensioned to be retained by the retaining unit of the transfer adapter.

In one embodiment, the bag or the tubular liner comprises a lateral pocket dimensioned to receive and to hold a retaining unit.

The bag or the tubular liner may further comprise a removal tool which is designed to engage with the retaining unit, in particular the removal member of the retaining unit, such as to facilitating pulling or pushing of the retaining unit out of the adapter unit. The removal tool may for example be a hooked tool, wherein the hook is designed catch with a lug or a flap of the removal member. Other designs are also possible.

The removal tool may be fixed inside the bag or tubular liner at the wall of the bag or tubular liner.

The removal tool may comprise a handle potion allowing it to be gripped either manually or by a suitable robotic mechanism.

Once the retaining unit has been removed from the adapter unit, it can be moved into the lateral pocket of the bag or the tubular liner together with the removal tool.

The lateral pocket containing the removed retention unit and, optionally, the removal tool may then be separated from the main chamber of the bag, respectively from the transfer passage, for example by twisting lateral pocket such as to close the connecting opening between the pocket and the main chamber of the bag, respectively from the transfer passage, or by crimping or pinch clamping said connecting opening.

The transfer adapter of this invention may be used for connecting a bag or a tubular liner to a container for transfer of material into the container or out of the container. It is particularly useful for the transfer of bulk material from a container or into a container. The transfer of the bulk material is preferably driven by pravity flow.

In a first step of the transfer the retaining and the an adapter unit are provided as separate elements.

The adapter unit is then fastened to an aperture of a container, such that the transfer opening is aligned with said aperture of the container.

A circumferential strip of a bag or of a tubular liner is then fastened in the retaining unit, such as to maintain the bag or the tubular liner in an open state.

The retaining unit together with the retained bag or tubular liner is then placed into the transfer opening of the adapter unit, where a transfer passage is formed by joining the inner volume of the container with the inner volume of the bag or the tubular liner. The transfer passage is delimited by a portion of the inner wall of the adapter unit and by the inner wall of the bag respectively the tubular liner.

The transfer adapter having a first and a second position each arranged to hold one retaining unit as described above, is particularly suited for repeatedly establishing transfer connections, such as to enable consecutive emptying or filling of a container using a series of bags and/or tubular liners.

To do this, the above described process of connecting a bag or a tubular liner to a container is performed.

The retaining unit holding the bag or the tubular liner, which is the first bag respectively the first tubular liner, is then translationally displaced from the first position to the second position in the transfer opening of the adapter unit.

In a subsequent step the first bag or the first tubular liner is closed while it is still retained by the retaining unit. Therefore, the portion of the first bag or the first tubular liner serving for closing the first bag or first tubular liner is at a suitable distance from the circumferential strip portion retained by the retaining unit. The first bag or first tubular liner may for example be closed by pinch clamping or crimping the first bag or first tubular liner at a distance from said circumferential strip portion.

The closed portion, or severed portion, which contains the site of closure as well as the circumferential strip fixed in the retaining unit, is then severed, for example cut, from the remainder of the first bag or of the first tubular liner.

In one embodiment said remainder of the first bag or of the first tubular liner is also closed, for example by twisting, crimping or pinch clamping, such as to maintain the contamination status of its internal space.

The separated remainder of the first bag or the first tubular liner is then removed from the transfer adapter.

A second retention unit retaining a second bag or a second tubular liner, said second bag or second tubular liner having a lateral pocket for receiving and holding a retention unit, may the be placed at the first position in the transfer opening of the adapter unit,

Once the retaining unit with the severed portion of the first bag or of the first tubular liner are in the second position and the second retaining unit holding the second bag or the second tubular liner is arranged in the first position, the first retention unit is removed from the adapter unit by pulling the retention unit into the second bag or into the second tubular liner.

The removed first retention unit holding the severed portion of the first bag or of the first tubular liner may then be placed in the lateral pocket of the second bag or of the second tubular liner.

Optionally, the lateral pocket of the second bag or the second tubular liner, may then be closed thereby disconnecting the lateral pocket from the transfer passage respectively from the main chamber of the bag.

Once a connection between a container and a bag or a tubular liner is established, material can be transferred into or out of the container.

In one embodiment material is transferred from a first container into a second container through the transfer passage formed by the transfer opening and the bag or the tubular liner.

For this purpose, a connection between the first container and a fill opening of a bag or a tubular liner is established using the transfer adapter of this invention as described above. By connecting the bag or tubular liner to the first container a transfer passage for the material to be transferred is formed.

A second connection is then established between a second container and a discharge opening of the same bag or the tubular liner.

The material held in the first container can thus be filled into the bag or tubular liner, which due to its second connection with the second container, can subsequently be emptied into a second container.

The transfer process thus has a filling step, in which the material of the first container enters the transfer passage formed by the bag or the tubular liner, and an emptying step, in which the material contained in or passing through the bag or the tubular liner is transferred into the second container through the discharge opening and the transfer adapter.

The filling and emptying steps may be performed continuously, such that there is no clear separation between these steps, for example when the material flows from the first to the second container through the established transfer passage.

It is however also possible, that the filling step and the emptying step are distinct steps, performed in sequence, but not as a continuous process. In this embodiment the bag or the tubular liner is first filled through its filling opening and contains the received material in a chamber. In a subsequent step the discharge opening is formed to opened, to enable emptying the bag or tubular liner into the second container through the discharge opening held in the transfer adapter.

Compared to the state of the art this modular transfer adapter, with a removable retaining unit, facilitates repeated transfer processes of material from and/or into bags of tubular liners in that it avoids unfavourable and obstructive stacking of transfer adapter material at the site of transfer of the material. The transfer adapter increases the efficiency of repeated transfer processes, in particular in industrial and automated settings, as no hight variations of fill or discharge openings have to be considered for repeated transfer processes.

### Short description of the drawings

Exemplar embodiments of the invention are disclosed in the description and illustrated by the drawings in which:
**Figure 1A** is a schematic perspective view of an embodiment of a transfer adapter 70 with an adapter unit 20 and a retaining unit 101;
Figure 18 is a schematic perspective view of an embodiment of an adapter unit 20 without the retaining unit 101;

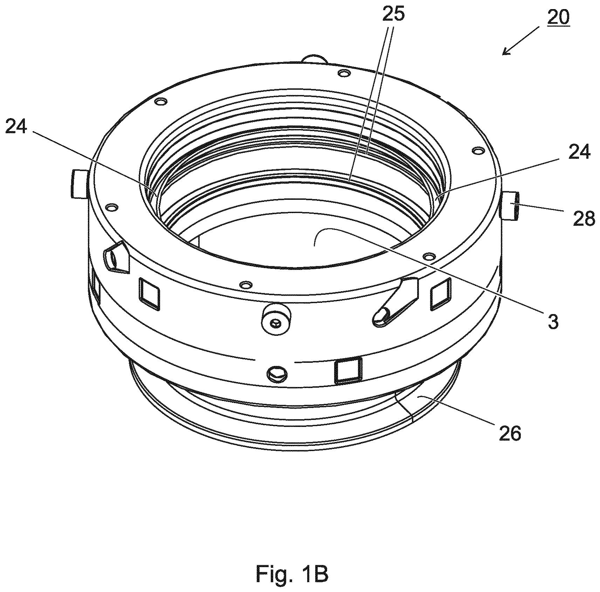

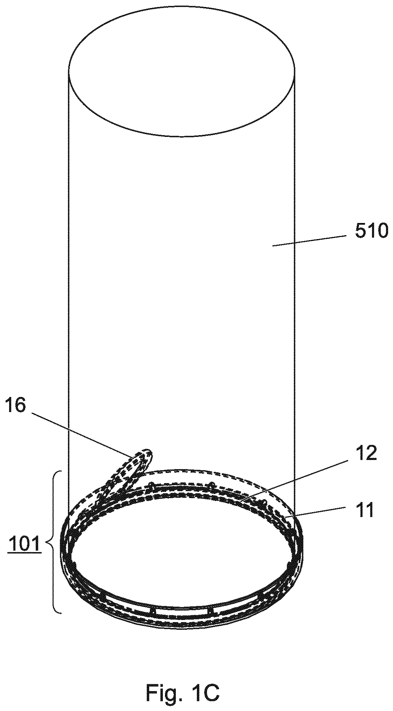

**Figure 1C** is a schematic perspective view of an embodiment of a retaining unit 101 for the adapter unit 20 of Figure 1B holding a bag 510;

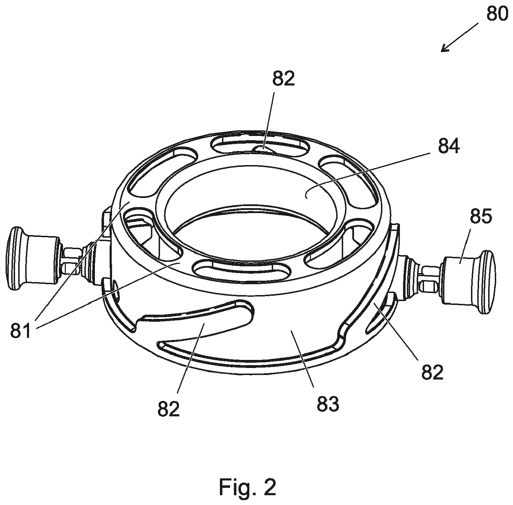

**Figure 2** is a schematic perspective view of an embodiment of a fitting tool 80 suitable for fitting the retaining unit of Figure 1C into the adapter unit of Figure 1B,

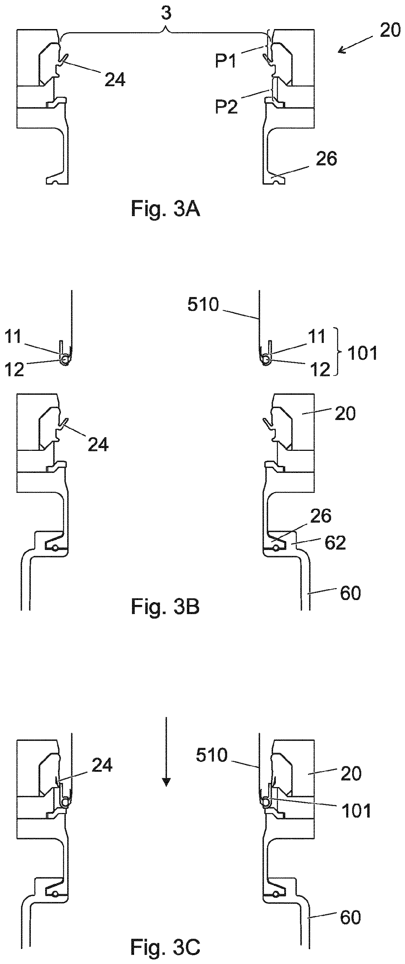

**Figures 3A to 3H** illustrate schematically the different steps of a process for repeatedly connecting a series of bags or tubular liners to a container to enable transfer of material between the bags respectively the tubular liners and the container, with
**Figure 3A** depicting a cross-sectional view of an adapter unit 20,
**Figure 3B** showing the adapter unit 20 connected to a container 60 and a first retaining unit 101 ready for positioning in the transfer opening 3,
**Figure 3C** shows the same retaining unit 101 placed inside the transfer opening,

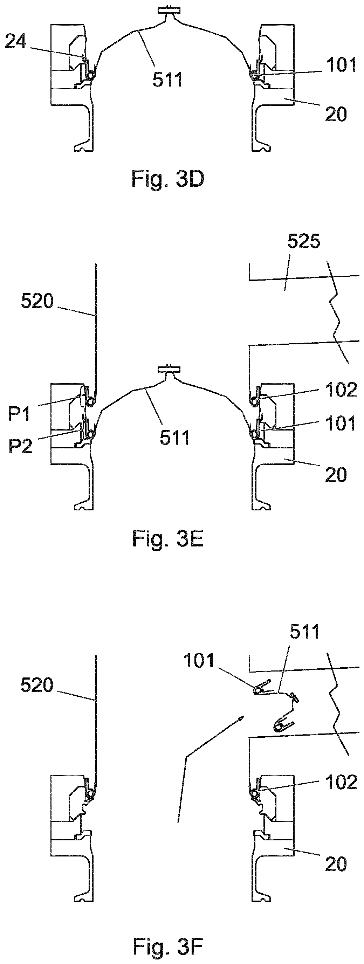

**Figure 3D** shows a severed portion of the closed bag or tubular liner retained in the transfer opening 3 after completion of the transfer,
**Figure 3E** shows a second retaining unit 102 holding a second bag or tubular liner 520 inserted into the transfer opening,
**Figure 3F** shows the removal of the first retaining unit 101 from the adapter unit 20 and its placement into a latera pocket 525 of the second bag,

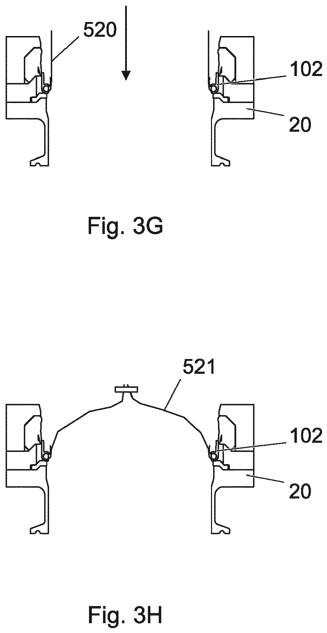

**Figure 3G** shows the second retaining unit 102 with the second bag or tubular liner 520 arranged for at the second position in the adapter unit 20 transfer of the material,
**Figure 3H** shows the closed severed portion 521 of the second bag held by the retaining unit 102 inside the adapter unit 20 after the second transfer of material into the container,

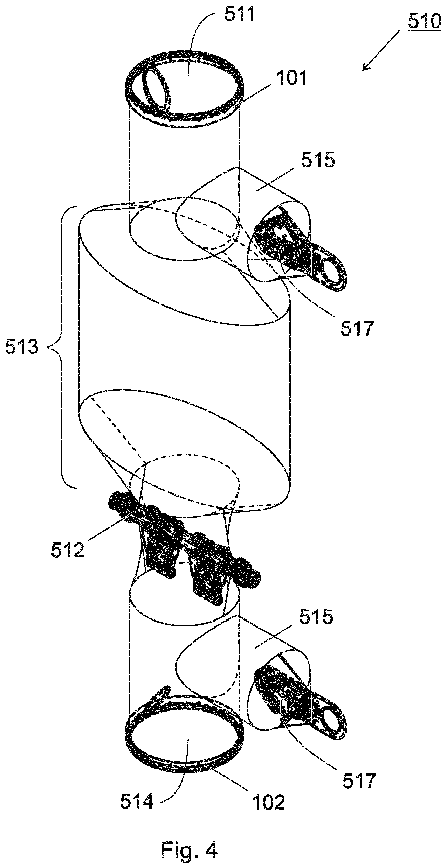

**Figure 4** is a schematic depiction of an embodiment of a bag 510 for transferring material from a first container to a second container.

### Examples of embodiments of the present invention

The invention is explained in more detail using the example shown in the figures.

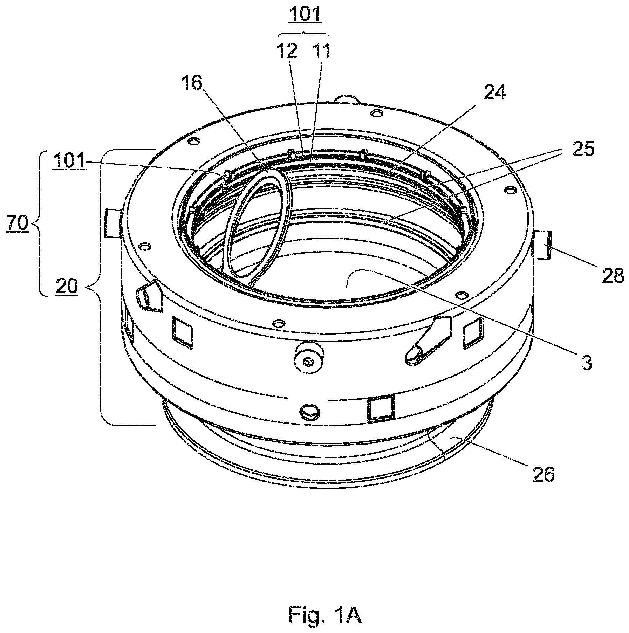

Figure 1A shows an assembled transfer adapter 70 comprising an adapter unit 20 and a retaining unit 101. The adapter unit 20 and retaining unit are generally provided separately. Figure 1B depicts an adapter unit 20 from which the retaining unit is removed. Figure 1C depicts the retaining unit 101 which holds a bag or a tubular liner 510.

The adapter unit 20 is of a general cylindrical shape, with its inner walls delimiting a transfer opening 3. It is provided with a fastening member 26 for reversibly connecting the transfer adapter to an aperture of a container having compatible fastening members 62 (Figure 3B).

A sealing element, in the example shown an upwardly tilted sealing lip 24 is provided along the inner wall of the transfer adapter 20. Additional sealing elements 25 arranged along the inner wall further reduce the risk of contamination during transfer of the material through the adapter by providing a continued tight seal between the retaining unit 101 and the adapter unit 20 when the retaining unit is displaced in the transfer opening 3.

As depicted in Figure 1A, the retaining unit 101, which is a generally ring-shaped element, may be inserted in the transfer opening 3 of the adapter unit 20 just above the upwardly bent sealing lip 24, such that the lip contacts the retaining unit to form a seal. This position of the retaining unit 101 in the adapter unit 20 is the first position P1. The retaining unit is designed such that it can be translationally displaced within the transfer opening. During its displacement it is in continuous contact with the adapter unit 20, in particular with its sealing elements 24, 25. The continued seal is important to avoid contamination during the connection and/or transfer process.

The retaining unit 101 comprises a retaining fixture 11 into which a potion of the bag or tubular liner 510 is fitted, and a retaining element 12, which affixes the bag or liner in the retaining fixture 11. As shown in Figure 1C, and also as a cross section in Figure 3B, the retaining fixture 11 of this embodiment is a ring with a circumferential inner groove, into which a circumferential portion of the bag or tubular liner 510 can be inserted. The retaining element 12 has a ring-shaped structure compatible with said inner groove of the retaining fixture 11, such that the inserted portion of the bag or tubular liner is pinched in the groove, when the retaining fixture 11 is placed therein. The bag or liner 510 is thus solidly held in the assembled retaining unit 101 and cannot slide from the retaining unit when pulled.

The retaining unit 101 may be provided with a removal member 16, which is arranged to facilitate the extraction of the retaining unit 101 from the assembled transfer adapter 70. Preferably, the removal member 16 is thus connected to the retaining fixture 11. The removal member 16 may for example be a lug as shown in Figures 1A and 1C.

In order to facilitate the correct insertion of the retaining unit 101 in the adapter unit 20, a suitable fitting tool 80 may be used.

Figure 2 shows an example of such a fitting tool 80. The fitting tool 80 comprises an outer cylindrical member 83 and an inner cylindrical member 84 which are concentrical and fixed in position to each other through a bridging member 81.

The outer cylindrical member 83 is dimensioned to match the outer dimension of the adapter unit, while the inner cylindrical member 83 is dimensioned to fit inside the transfer opening 3. The inner cylindrical member 83 is dimensioned to glide along the inner wall of the transfer unit 20.

When in use, the fitting tool 80 is placed onto the transfer adapter 70 such that the cylindrical wall of the adapter unit 20 is placed between the outer cylindrical member 83 and the inner cylindrical member 84 of the fitting tool 80. The inner cylindrical member 83 is dimensioned to glide along the inner wall of the transfer unit 20. The cylindrical member 83 is further dimensioned such that its rim opposite the bridging member 81 contacts the retaining unit 101 positioned inside the transfer adapter 70. When pushed downwards, the fitting unit will thus displace the retaining unit 101 downwards in the adapter unit 20.

To ensure that the retaining unit 101 is pushed into its desired position, for example a first defined position P1 or a second defined position P2, as further described below, the fitting tool may be provided with guiding members 82, which define the extent of the downwards movement of the fitting tool 80. In the example shown, the fitting tool is provided with guiding grooves 82 into which a compatible guiding protrusion 28 of the adapter unit 20 (see Figure 1B) may be fitted. The helical arrangement of the grooves in the outer cylindrical member 83 of the fitting tool defines a downward rotation of the fitting tool 80. The displacement of the retaining unit 101 in the adapter unit 20 is therefore driven by a rotational downward push of the fitting tool 80.

The fitting tool may further be equipped with suitable fixation members 85, for example screws or clamps, which serve to fix the position of the fitting tool 80 in respect of the adapter unit 20.

A repeated method for repeatedly connecting different bags or tubular liners 510, 520 to a container 60 according to this invention is exemplified in more detail in Figures 3A to 3F.

The example depicted in these Figures shows a process suitable for emptying the content of successively connected tubular liners 500 into a container 60 which is arranged underneath the bag or the tubular liner 510, 520. The connection between the bag or the tubular liner 510, 520 and the container 60 is established by the transfer adapter of this invention, through which the material is discharged into the container. The process is schematically illustrated with cross sectional views of the relevant components. The illustrations are not to scale.

In analogy, the transfer adapter may also be used to successively connect bags or tubular liners to a container such that the material held in said container can be filled into the bag or tubular liner. For this process, the container to be emptied may be arranged above the bag or tubular liner. This is particularly advantages, if the material is filled into the bag or tubular liner by gravity flow. It is however also possible to arrange the container to be emptied laterally in respect of the bag or the tubular liner.

Figure 3A depicts an adapter unit 20 of the transfer adapter, in which the retention unit has not yet been inserted. The adapter unit is provided with two distinct positions P1, P2, each adapted to receive a retaining unit 101, 102. The inner wall of the adapter unit delimits a transfer opening 3. As shown in the Figures, the transfer adapter 70 preferably takes a generally hollow-cylindrical shape, with the transfer opening 3 being a circular opening.

The adapter unit 20 further comprises one or more fastening member 26 for engaging with one or more compatible members 62 of the container, such as to reversibly fix the adapter to the aperture of the container 60 (Figure 3B).

The one or more fastening members 26 of the adapter units are designed to suitably fix the adapter unit to said aperture such as to avoid gaps between the aperture and the adapter unit, which could lead in spillage of the transferred material or in contamination of the material and/or of the container. Different fastening mechanisms, such as a bayonet clamp, are known to the person skilled in the art. The invention is not particularly limited to the type of fastening mechanism used, provided it is suitably adapted to prevent material from leaking and contamination from the environment.

The fastening members 26 are preferably integral parts of the adapter unit 20. It is however also possible to provide them as separate elements which are attachable to the adapter unit 26.

In Figure 3B the adapter unit is coupled to the aperture of a container 60. A first retaining unit 101, comprising a retaining fixture 11 and a retaining element 12, is provided separately. The first retaining unit is inserted into the transfer opening 3 of the adapter unit 20. It can be placed in the first position P1, or in the second position P2 in the adapter unit 20 as is shown in Figure 3C.

The adapter unit 20 comprises an inwardly projecting sealing lip 24, which is tilted upwards when relaxed. The sealing lip is positioned between the first position P1 and the second position P2 and contacts the retaining unit 101, 102 when the retaining unit is placed in the first position.

Upon sliding the retaining unit 101, 102 from the first portion P1 into the second position P2, the sealing lip 24 tilts or pivots downwards, maintaining its tight connection with the retaining unit 101, 102 throughout the displacement. The sealing lip is tensioned when tilted or pivoted downwards when the retention unit 101, 102 is in the second position P2. As a result, the sealing lip 24 presses inwardly against the retention unit 101,102 thereby securing the tightly sealed connection with the retention unit 101, 102.

It is possible to transfer material into or out of the bag or the tubular liner 510, 520 regardless of whether the retention unit is placed in the first position P1 or in the second position P2. However, when the sealing lip described above is provided as a sealing element 24, it is preferable to transfer the material when the retaining unit 101, 102 takes the second position P2, as the sealing connection between the adapter unit 20 and the retaining unit 101, 102 is tighter in this position as explained in the previous paragraph.

Figure 3C depicts the retaining unit 101 placed in the second position P2 and the transfer passage being formed between the bag or tubular liner 510 and the container 60. The direction of transfer of the material in the transfer passage is indicated by an arrow. It preferably follows gravity flow, as exemplified in this Figure.

Following the completion of the transfer of the material, the bag or tubular liner 510 is closed for example by pinch clamping or crimping the first bag or first tubular liner (510) at a distance from the circumferential strip portion retained in the retaining unit (101), as shown in Figure 3D. A severed portion (511) of the first bag or of the first tubular liner containing the retained circumferential strip as well as the closed portion of the first bag or the first tubular liner from the remainder of the first bag or the first tubular liner, is the severed, for example cut, from the empty remainder of the bag or tubular liner. This remainder is removed from the transfer adapter to allow access to the severed portion 511 of the bag or the tubular liner.

Optionally, the remainder of the bag or tubular liner may also be closed, example by crimping or pinch clamping, in order to maintain the contamination-free status of the bag. Preferably, the separation line between the two portions of the bag of tubular liner is between the closed sections of either of these portions and is only severed after these sections have been closed.

With the remainder of the first bag or tubular liner 510 being removed from the transfer adapter, a second retaining unit 102 holding a second bag or tubular liner 520 can now be inserted into the transfer opening 3 of the adapter unit 20, as shown in Figure 3E.

The second retaining unit 520 is initially placed in the first position P1, since the second position P2 is occupied by the first retaining unit 101 holding the closed severed portion 511 of the first bag or tubular liner.

Once the second retaining unit 520 is in the first position P1, the first retaining unit 510 is removed from the adapter unit and pulled into the second bag 520. For this purpose, the retaining unit may be provided with a removal member 16 which renders the removal of the retaining unit from the adapter unit 20 easier. The removal member may be a flap or a lug for example. Optionally, a suitable tool 517, such as a hook or a tool with pinching jaws, may be provided inside the second bag or tubular liner 520 for grasping the removal member 16. The tool 517 is preferably affixed to a wall of the bag or tubular liner, for example as shown in Figure 4.

In order to avoid any undesirable interference with the transfer process, the removed first retaining unit 101 with the severed portion of the first bag or tubular liner 511 is placed in a lateral pocket 525 of the second bag, which protruded laterally from the wall of the transfer passage. The removal of the retaining unit from the transfer passage into the lateral pocket 525 is indicated with an arrow in Figure 3F.

In Figure 3G the transfer passage is now established by the second bag or tubular liner 520 held in the second position P2 on the transfer opening by the second retaining unit 102. A second transfer can now be performed in the indicated direction.

In analogy to the first transfer process, the second bag or tubular liner 520 is closed and a severed portion 521 is severed from the remainder of the second bag to tubular liner. This status is depicted in Figure 3H, which corresponds to the status of the first bag or tubular liner shown in Figure 3D.

The transfer process may now be repeated with a third bag or tubular liner held in a third retaining unit. The process can be repeated as often as required and thus allows a serial transfer of materials.

While the transfer process presented in Figures 3A to 3H shows an emptying procedure of a bag or a tubular liner into a container, the same process can also be performed for filling a bag of a tubular liner. For this purpose, the transfer adapter is attached to a discharge aperture of a container, which may be placed at the bottom of the container. The one or more retaining units 101, 102 are then inserted into the transfer opening against the direction of the transfer. The second position P2 in the transfer opening 3 is closer to the discharge aperture of the container than the first position P1.

In one embodiment depicted in Figure 4 a bag 510 has a fill opening 511 and a reversibly sealable portion 512, which forms the bottom of the receiving inner space of the bag. The filling opening 511 and the sealed portion form a receiving chamber 513 for the material. The sealed portion may separate the receiving chamber of the bag from a portion comprising a second opening 514, which is a discharge opening.

When the sealable portion 512 is sealed, the bag 510 can thus receive and hold material filled through the transfer adapter into the bag. It can be attached to the first container using the transfer adapter to be filled and containing material from the container.

In order to empty the contents of the bag into a second container, the second discharge opening 514 is connected to said second container using a transfer adapter of this invention. The sealing portion 512 is opened such that the content held in the chamber 513 of the bag empties into the second container through the transfer adapter.

The bag 510 may be provided with one or two lateral pockets 515 and/or removal tools 517. If two lateral pockets 515 and/or removal tools 517 are provided, they should be located on either side of the sealable portion 512. Two lateral pockets 515 are particularly advantageous, as they allow for complete removal of the retaining units and severed potions of bags or tubular liners from both transfer openings when the bag is designed to be filled and emptied through opposite openings.

It is possible, that the fill opening of the bag is closed and that the bag is removed from the transfer adapter at the first container before the bag is connected to the second container.

It is however also possible, that the bag remains connected to the first container throughout the filling and emptying of the bag.

## Claims

1. A transfer adapter (70) for connecting a bag or a tubular liner to a container for filling or emptying said bag or said tubular liner, said transfer adapter comprising
- an adapter unit (20) for connecting to an aperture of a container, said adapter unit having an inner wall delimiting a transfer opening (3), and
- a retaining unit (101, 102) comprising a retaining fixture (11) for receiving a circumferential strip of a bag or of a tubular liner (510, 520), and a retaining element (12) being configured to hold said circumferential strip in the retaining fixture (11) such as to maintain the bag or the tubular liner (510, 520) in an open state,
wherein the retaining unit (101, 102) is dimensioned to be removably positioned inside transfer opening (3) such that the transfer opening together with the open bag or together with the open tubular liner (510, 520) form a transfer passage.

2. The transfer adapter of claim 1, wherein a sealed connection between the retaining unit (101, 102) and the inner wall of the adapter unit (20) is formed when the retaining unit (101, 102) is inserted in the adapter unit (20).

3. The transfer adapter of claim 1 or 2, wherein the retaining unit (101, 102) is elastically deformable.

4. The transfer adapter of any of claims 1 to 3, wherein the retaining unit (101, 102) comprises a removal member (16), for example an appendix such as a lug, arranged to permit removal of the retaining unit (101, 102) from the adapter unit (20) when the removal member (16) is pulled.

5. The transfer adapter of any of claims 1 to 4, wherein the retaining unit (101, 102) is configured to be translationally displaceable from a first position P1 in the transfer opening (3) to a second position P2 in the transfer opening (3).

6. The transfer adapter of claim 5, wherein the adapter unit (20) is configured to hold two retaining elements (101, 102), one of said retaining elements being placed in the first position P1 and the other retaining element (101) being placed in the second position P2.

7. The transfer adapter of claim 5 or 6, wherein the adapter unit (20) comprises one or more sealing elements (24, 25) said sealing elements being arranged to provide a sealed connection between the inner wall of the adapter unit and the retaining unit (101, 102) and to maintain the sealed connection between the inner wall of the adapter unit (20) and the retaining unit (101, 102) when the retaining unit is moved from the first position P1 to the second position P2.

8. The transfer adapter of any of claims 5 to 7, wherein the sealing element is a elastically deformable or pivotable sealing lip (24) which is located between the first position P1 and the second position P2 of the retaining unit and which is facing inwardly and angled in the opposite direction of the transfer of the material when the retaining unit (101, 102) is placed in the first position P1, which is arranged to be pushed in direction of the transfer by the retaining unit (101, 102) when the retaining unit (101, 102) is moved into the second position P2, and which is arranged to maintain the sealed connection during the translational displacement of the retaining unit (101, 102) from the first position P1 to the second position P2.

9. A set of the transfer adapter (70) of any of claims 5 to 8 and a fitting tool (80), said fitting tool being configured to engage with the retaining unit (101, 102) and to cause the retaining unit (101, 102) to move from the first position (P1) to the second position (P2) when the fitting tool is pushed in the direction of transfer.

10. A connection system comprising
- the transfer adapter (70) of any of claims 5 to 8 configured to be connected to an aperture of a container, and
- a transfer bag or a transfer tubular liner (510, 520) dimensioned to be retained by the retaining unit (101, 102) of the transfer adapter (70).

11. The connection system of claim 10, wherein the transfer bag and the tubular liner (510, 520) are provided with two openings which are arranged on opposite ends of the bag respectively the tubular liner and wherein each of said opposite openings is suitable to be fitted to the retaining unit (101, 102) of the transfer adapter.

12. The connection system of claim 10 or 11, the transfer bag or the transfer tubular liner (510, 520) comprising a lateral pocket (515, 525) dimensioned to receive and hold a retaining unit (101, 102).

13. Method for connecting a bag or a tubular liner (510, 520) to a container (60) for transfer of material into the container or out of the container comprising the steps of
- separately providing a retaining unit (101, 102) of the transfer adapter (70) of claims 1 to 8 comprising a retaining fixture (11) and a retaining element (12), and an adapter unit (20) of the transfer adapter of claims 1 to 8 having an inner wall delimiting a transfer opening (3),
- fastening the adapter unit (20) to an aperture of a container, such that the transfer opening is aligned with said aperture of the container,
- fastening a circumferential strip of a bag or of a tubular liner (510, 520) in the retaining unit (101, 102), such as to maintain the bag or the tubular liner in an open state,
- inserting the retaining unit (101, 102) retaining the bag or the tubular liner (510, 520) into the transfer opening (3) of the adapter unit thereby forming a transfer passage joining the inner volume of the container with the inner volume of the bag or the tubular liner (510, 520).

14. Method for repeatedly establishing connections between a container and a bag (510, 520) or container and a tubular liner (510, 520) comprising the steps of claim 13, further comprising the steps of
- translationally moving the retaining unit (101) retaining the bag or the tubular liner (510), which is the first retention unit (101) retaining the first bag or the first tubular liner, from a first position P1 to a second position P2 in the transfer opening of the adapter unit,
- closing the first bag or the first tubular liner (510), for example by pinch clamping or crimping the first bag or first tubular liner (510) at a distance from the circumferential strip portion retained in the retaining unit (101), and separating a severed portion (511) of the first bag or of the first tubular liner containing the retained circumferential strip as well as the closed portion of the first bag or the first tubular liner from the remainder of the first bag or the first tubular liner,
- removing the separated remainder of the first bag or the first tubular liner from the transfer adapter,
- providing a second retention unit (102) retaining a second bag or a second tubular liner (520), said second bag or second tubular liner having a lateral pocket (525) for receiving and holding a retention unit,
- inserting the second retention unit (102) retaining the second bag or the second tubular liner (520) into the first position P1 in the transfer opening of the adapter unit (20),
- removing the first retention unit (101) retaining the severed portion of the first bag or the severed portion of the first tubular liner (511) from the adapter unit (20) by pulling the retention unit (101) into the second bag or into the second tubular liner (520),
- placing the first retention unit retaining the severed portion of the bag or the severed portion of the tubular liner in the lateral pocket (525) of the second bag or the second tubular liner, and
- optionally, closing the lateral pocket (525) of the second bag or the second tubular liner, thereby disconnecting the lateral pocket from the transfer passage.

15. Method for transferring of a material from a first container to a second container comprising the steps of
(i) establishing a connection between a first container and a fill opening of a bag or a tubular liner (510, 520) according to claim 13,
(ii) establishing a connection between a second container and a discharge opening of a bag or a tubular liner (510, 520) according to claim 13,
(iii) transferring of material from the first container to the second container through a transfer passage provided by the bag or the tubular liner (510, 520).

16. Method of any of claims 13 to 15 for transferring bulk material from a container into a bag or through a tubular liner (510, 520), or from a bag or through a tubular liner into a container, comprising the steps of performing the method of claim 13, claim 14 or claim 15, further comprising the steps of
(iv) passing bulk material through the transfer passage established the between the containers.
